Europäisches Patentamt

European Patent Office

Office européen des brevets

(19)

(11) **EP 0 675 812 B1**

(12) **EUROPÄISCHE PATENTSCHRIFT**

(45) Veröffentlichungstag und Bekanntmachung des Hinweises auf die Patenterteilung:
**05.03.1997 Patentblatt 1997/10**

(21) Anmeldenummer: **94930949.6**

(22) Anmeldetag: **13.10.1994**

(51) Int. Cl.$^6$: **B60C 23/06**

(86) Internationale Anmeldenummer:
**PCT/EP94/03373**

(87) Internationale Veröffentlichungsnummer:
**WO 95/12498 (11.05.1995 Gazette 1995/20)**

(54) **VERFAHREN UND SCHALTUNGSANORDNUNG ZUR REIFENDRUCKÜBERWACHUNG**

PROCESS AND CIRCUIT FOR MONITORING TYRE PRESSURE

PROCEDE ET CIRCUIT DE SURVEILLANCE DE LA PRESSION DES PNEUS

(84) Benannte Vertragsstaaten:
**DE FR GB**

(30) Priorität: **03.11.1993 DE 4337443**

(43) Veröffentlichungstag der Anmeldung:
**11.10.1995 Patentblatt 1995/41**

(73) Patentinhaber: **ITT Automotive Europe GmbH 60488 Frankfurt (DE)**

(72) Erfinder:
• **LATARNIK, Michael**
  **D-61381 Friedrichsdorf (DE)**
• **EHMER, Norbert**
  **D-65760 Eschborn (DE)**

(56) Entgegenhaltungen:
**EP-A- 0 466 535        EP-A- 0 552 827
DE-A- 3 915 879         FR-A- 2 568 519**

## Beschreibung

Die Erfindung bezieht sich auf ein Verfahren zur Reifendrucküberwachung durch Messen, Vergleichen und Auswerten der Drehgeschwindigkeiten der einzelnen Fahrzeugräder. Eine Schaltungsanordnung zur Durchführung des Verfahrens gehört ebenfalls zur Erfindung.

Aus den US-Patentschriften Nr. 4 876 528 und 5 192 929 sind bereits Verfahren zum Erkennen von Reifendruckverlust bekannt, die auf dem Messen und Vergleichen der Drehgeschwindigkeiten der einzelnen Fahrzeugräder beruhen. Im Prinzip wird nach beiden Schriften die Drehgeschwindigkeiten der diagonalen Räder summiert und die Differenz beider Summen ermittelt. Wenn diese Differenz zwischen 0,05% und 0,60% des Mittelwerts beider Summen liegt, darf die Drehgeschwindigkeit jedes einzelnen Rades, solange genügender Reifendruck vorhanden ist, höchstens um 0,1% von der mittleren Geschwindigkeit aller vier Räder abweichen. Bei größerer Abweichung wird Druckverlust signalisiert.

Die Genauigkeit dieser bekannten Verfahren läßt zu wünschen übrig. Wird ein Reserverad oder "Notrad" mit abweichendem Durchmesser montiert, versagt die Methode vollständig.

Es sind noch weitere, im Prinzip auf dem gleichen Algorithmus basierende Verfahren bekannt US-PS 35 81 277, JP 63-305011(A), FR-25 685 19-A).

Es ist auch bereits aus der DE 39 15 879-A1 ein Verfahren zum Auswerten der Geschwindigkeitssignale, die das Drehverhalten der einzelnen Räder eines Fahrzeugs wiedergeben, bekannt, bei dem für jedes Rad ein Geschwindigkeitskorrekturfaktor ermittelt wird. Die Multiplikation der momentanen Radgeschwindigkeit mit dem Geschwindigkeitskorrekturfaktor ergibt eine gemeinsame Basisgeschwindigkeit, die z.B. aus der Geschwindigkeit des momentan langsamsten Rades abgeleitet ist. Die mit dem zugehörigen Korrekturfaktor multiplizierte Radgeschwindigkeit wird dann anstelle der tatsächlichen Radgeschwindigkeit der weiteren Signalverarbeitung zugrunde gelegt. Das Verfahren dient zur Ermittlung des Raddrehverhaltens im Rahmen einer Blockierschutzregelung.

Das vorveröffentlichte Dokument EP-A-0 466 535 zeigt ein Verfahren zur Reifendrucküberwachung durch Messen, Vergleichen und Auswerten der Drehgeschwindigkeiten der einzelnen Fahrzeugräder, bei dem nach einem Lernverfahren in einer Lernphase für die einzelnen Fahrzeugräder Geschwindigkeits-Korrekturfaktoren gebildet werden.

Der Erfindung liegt die Aufgabe zugrunde, ein Verfahren zur Reifendrucküberwachung zu schaffen, das sich durch höhere Genauigkeit und Zuverlässigkeit im Vergleich zu den bekannten Verfahren auszeichnet und das auch dann anwendbar ist, wenn Reifen montiert sind, die infolge von Fertigungstoleranzen, ungleichmäßiger Abnutzung oder dergl. oder weil sie nur als Notrad dienen, unterschiedlichen Abrollumfang aufweisen.

Es hat sich gezeigt, daß diese Aufgabe durch das im Anspruch 1 beschriebene Verfahren gelöst werden kann, dessen Besonderheit darin besteht, daß für die einzelnen Fahrzeugräder Geschwindigkeitskorrekturfaktoren gebildet werden, die multipliziert mit der Radgeschwindigkeit eine Basisgeschwindigkeit ergeben, wobei in einer Lernphase die Werte der einzelnen Korrekturfaktoren ermittelt,
Korrelationen zwischen den Korrekturfaktoren für typische Fahrsituationen festgestellt und
von der jeweiligen Fahrsituation abhängige Bandbreiten bzw. "Toleranzen" für die Korrekturfaktoren ermittelt werden, daß in einer Identifizierungsphase die Abweichungen der Korrekturfaktoren von den gelernten Werten unter Berücksichtigung der von der Fahrsituation abhängigen Toleranzen und dem Fortschritt des Lernverfahrens festgestellt und bewertet werden und
daß Reifendruckverlust signalisiert wird, wenn für ein Rad der aktuelle Korrekturfaktor unter Berücksichtigung der aktuellen Abweichung kleiner wird als der für die aktuelle Fahrsituation in der Lernphase für das betreffende Rad bereits ermittelte Geschwindigkeitskorrekturfaktor unter Berücksichtigung der für die aktuelle Fahrsituation während der Lernphase bereits ermittelten Toleranz.

Das erfindungsgemäße Verfahren zur Reifendrucküberwachung beruht also auf dem Bilden und Auswerten von Geschwindigkeitskorrekturfaktoren, die gewissermaßen die Unterschiede im Durchmesser der einzelnen Räder ausgleichen, und in einer Gliederung des Verfahrens in eine Lern- und eine Identifizierungsphase. Dabei werden zuerst die Werte der einzelnen Korrekturfaktoren und Korrelationen zwischen diesen Faktoren in typischen Fahrsituationen, z.B. Geradeausfahrt oder Kurvenfahrt, gelernt. An die Lernphase schließt sich die Identifizierungsphase an, in der die Abweichungen von den gelernten Korrekturfaktoren unter Berücksichtigung der Fahrsituation bewertet werden. Sobald das Lernverfahren so weit fortgeschritten ist, daß die Größe des Korrekturfaktors sehr genau festliegt und eine Fahrsituation - z.B. normale Geradeausfahrt - herrscht, in der bei intakten Reifen nur geringe Abweichungen der Korrekturfaktoren möglich sind, läßt sich Reifendruckverlust bzw. die dadurch eintretende Durchmesserverringerung sehr genau erkennen.

Nach einem vorteilhaften Ausführungsbeispiel der Erfindung wird Raddruckverlust signalisiert, wenn für ein Rad die folgende Bedingung erfüllt ist

$$K_x(t,FS) + G2_x(t,FS) < K_{Sp,x}(FS) - G1_{Sp,x}(FS),$$

wobei bedeuten:

| | |
|---|---|
| x = | Rad 1, Rad 2, Rad 3, Rad 4 |
| FS = | Fahrsituation |
| $K_x(t,FS)$ = | in der Identifizierungsphase (Phase 2) für das Rad x ermittelter aktueller Korrekturfaktor |
| $K_{Sp,x}(FS)$ = | für die aktuelle FS erwarteter, in der |

Phase 1 bereits ermittelter Geschwindigkeitskorrekturfaktor für das Rad x

$G1_{Sp,x}(FS) =$ für die aktuelle FS in der Phase 1 bereits ermittelte Toleranz

$G2_x(t,FS) =$ aktuelle Abweichung für das Rad x in der Phase 2.

Als typische Fahrsituationen, in denen Korrelationen zwischen den Korrekturfaktoren ermittelt und ausgewertet werden, gelten beispielsweise eine oder mehrere der folgenden Situationen:
Kurvenfahrt, Geradeausfahrt, hohe Fahrzeugbeschleunigung oder -verzögerung, schlechte Wegstrecke, hoher Antriebs- oder Bremsschlupf, Hoch- oder Niedrigreibbeiwert, unterschiedlicher Reibbeiwert rechts/links usw..

Aussagefähige Korrelationen werden z.B. durch paarweisen, achsweisen, diagonalen, seitenweisen Vergleich der Korrekturfaktoren, d.h. durch alle oder durch einige dieser Maßnahmen, gebildet.

Die Bewertung der Korrekturfaktor-Toleranzen erfolgt zweckmäßigerweise nach Genauigkeitswerten, die in der Lernphase ermittelt werden. Die Empfindlichkeitsschwellen, die zur Druckverlustsignalisieruug führen, wenn die Abweichungen diese Schwellen überschreiten, werden nach einem Ausführungsbeispiel der Erfindung in Abhängigkeit von der Fahrsituation oder in Abhängigkeit von der Fahrsituation und dem Lern-Fortschritt variiert.

Weiterhin ist erfindungsgemäß vorgesehen, die Lernphase durch vorgegebene Geschehnisse, wie Radmontage, Reset-Signal, und/oder durch regelmäßig wiederkehrende Ereignisse, wie Fahrzeug- oder Motorstart, Ablauf einer vorgegebenen Zeitspanne usw., in Lauf zu setzen.

Nach einem Ausführungsbeispiel wird die Lernphase abgeschlossen, wenn die Korrekturfaktoren eine vorgegebene Genauigkeitsschwelle erreicht haben, und zwar entweder unter Berücksichtigung der jeweiligen Fahrsituation oder unter der Voraussetzung idealer Bedingungen.

Die Identifizierungsphase wird erst nach Abschluß der Lernphase oder, sobald in der Lernphase eine Mindest-Genauigkeitsschwelle erreicht ist, gestartet.

Es können nach einem weiteren Ausführungsbeispiel der Erfindung mehrere Genauigkeitsschwellen vorgegeben werden, wobei die Empfindlichkeitsschwelle in Abhängigkeit von der in der Lernphase erreichten Genauigkeitsschwelle variiert wird.

Eine Schaltungsanordnung zur Durchführung des erfindungsgemäßen Verfahrens ist mit einer Tiefpaß-Filterschaltung ausgerüstet, der zur Bildung der Geschwindigkeitskorrekturfaktoren auf Basis der Radgeschwindigkeitssignale dient und deren Dämpfungscharakteristik in Abhängigkeit von der Fahrsituation, die das Ausgangssignal eines Fahrsituationserkennungskreises wiedergibt, veränderbar ist. Außerdem sind Schaltkreise zur Ermittlung der von der Fahrsituation abhängigen Toleranzen und Schaltkreise zur Ermittlung der Abweichungen von den gelernten Geschwindigkeitskorrekturwerten vorhanden.

Weitere Merkmale, Vorteile und Anwendungsmöglichkeiten der Erfindung gehen aus den folgenden Erläuterungen von Details anhand der beigefügten Schaltungen hervor.

Es zeigen

Fig. 1 schematisch die wichtigsten Komponenten einer Schaltungsanordnung zur Durchführung des erfindungsgemäßen Verfahrens,

Fig. 2 in vereinfachter Darstellung schematisch die wichtigsten Stufen einer ersten Phase (Lernphase) des Verfahrens nach der Erfindung und

Fig. 3 in gleicher Darstellungsweise die zweite Phase bzw. Identifizierungsphase des Verfahrens nach der Erfindung.

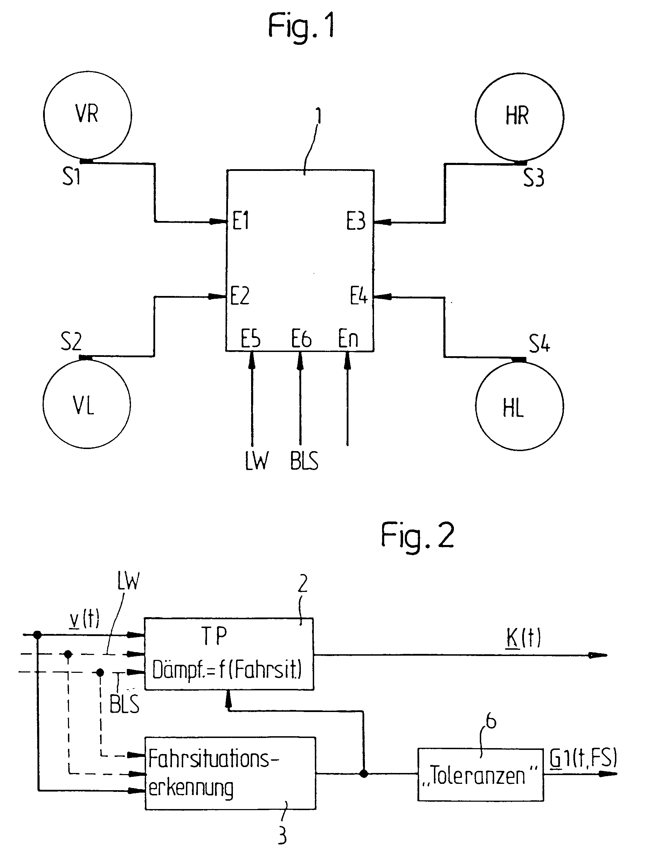

In Fig. 1 sind mit VR,VL,HR,HL die vier Räder eines Kraftfahrzeugs symbolisiert. Jedes Rad ist mit einem Radsensor S1 bzw. S2 bis S4 ausgerüstet, der ein Signal liefert, dessen Frequenz und/oder Amplitude die Geschwindigkeit des jeweiligen Rades wiedergibt.

Zur Aufbereitung und Auswertung der Sensorsignale und zur Erzeugung eines Warnsignals dient eine elektronische Schaltungsanordnung 1, die außer den Eingängen E1 - E4 für die Signale der Sensoren S1 bis S4 noch weitere Eingänge E5,E6,En zur Aufnahme zusätzlicher, für das Reifendrucküberwachungsverfahren oder für den Start des Verfahrens benötigter Informationen besitzt. Im vorliegenden Ausführungsbeispiel ist an einen Eingang E5 ein Lenkwinkelsensor LW angeschlossen, der ein zur Unterscheidung von Kurvenfahrt und Geradeausfahrt wichtiges Signal liefert. Ein Eingang E6 für einen Bremslichtschalter BLS ist ebenfalls angedeutet. Weitere Eingänge En dienen zum Anschluß weiterer Sensoren, externer Speicher für bereits gelernte Werte usw., je nach Ausführungs- und Anwendungsart der Erfindung.

Bei Fahrzeugen mit Blockierschutz- oder Antriebsschlupfregelungssystemen sind Radsensoren der beschriebenen Art und elektronische Schaltungsanordnungen zur Auswertung und Verarbeitung der Signale ohnehin vorhanden, die für die Reifendrucküberwachung zumindest teilweise mitverwendet werden können. Der erforderliche Zusatzaufwand für die erfindungsgemäße Reifendrucküberwachung wird beim Vorhandensein solcher Regelungssysteme minimal.

Fig. 2 dient zur Veranschaulichung der Phase 1, d.h. der Lernphase, des erfindungsgemäßen Verfahrens. Hierzu werden einer Tiefpaß-Filterschaltung 2 die mit Hilfe der Radsensoren S1 bis S4, siehe Fig. 1, gewonnenen und aufbereiteten Radgeschwindigkeitssignale $\underline{v}(t)$ zugeführt. Mit Hilfe solcher Filterschaltungen werden in an sich bekannter Weise, wie dies in der eingangs genannten DE 39 15 879 A1 beschrieben ist,

Geschwindigkeitskorrekturfaktoren $\underline{K}$(t) ermittelt, die ein Maß sind für die Abweichung der Radgeschwindigkeiten der einzelnen Räder von einer Basisgeschwindigkeit. Die Geschwindigkeitskorrekturfaktoren sind definitionsgemäß Werte, die multipliziert mit der jeweiligen Radgeschwindigkeit die Basisgeschwindigkeit ergeben. Es kann eine für alle Räder gemeinsame Basisgeschwindigkeit gebildet werden. Die Korrekturfaktoren werden dabei in einem Lernverfahren ermittelt, bei dem in jedem Rechenzyklus die Änderung gegenüber dem vorangegangenen Zyklus festgestellt und zur Korrektur des bisherigen Geschwindigkeitskorrekturfaktors ausgewertet wird.

Erfindungsgemäß werden nun, wie Fig. 2 zeigt, die Geschwindigkeitskorrekturfaktoren $\underline{K}$(t,FS) mit Hilfe einer Tiefpaß-Filterschaltung 2 gewonnen, deren Dämpfungscharakteristik eine Funktion der Fahrsituation ist; die vektorielle Schreibweise

$$\underline{K}(t,FS) = \begin{matrix} K_1(t,FS) \\ K_2(t,FS) \\ K_3(t,FS) \\ K_4(t,FS) \end{matrix}$$

bringt zum Ausdruck, daß für jedes Rad ein individueller Geschwindigkeitskorrekturwert gilt.

In einer Schaltung 3 zur Fahrsituationserkennung wird aus den Geschwindigkeitssignalen $\underline{v}$(t) der einzelnen Räder - im vorliegenden Beispiel unter Zuhilfenahme weiterer, über gestrichelte Leitungen 4 und 5 zugeführter Informationen - erkannt, ob Kurvenfahrt, Geradeausfahrt, Niedrigreibbeiwert oder Hochreibbeiwert, Brems- oder Antriebsschlupf oder eine andere typische Fahrsituation vorliegt. Das Fahrsituationserkennungssignal wird zum einen der Tiefpaß-Filterschaltung 2 und zum anderen einem Schaltkreis 6, der zur Ermittlung oder Abschätzung von fahrsituationsabhängigen Bandbreiten bzw. "Toleranzen" $\underline{G}$1(t,FS) für die Geschwindigkeitskorrekturfaktoren dient, zugeleitet.

In der Filterschaltung 2 werden die Korrekturfaktoren $\underline{K}$(t,FS) der einzelnen Räder in einem Lernprozeß gebildet. Der Lernprozeß ist dabei abhängig von der Fahrsituation FS. Beispielsweise ist bei Geradeausfahrt mit "normaler" Beschleunigung, also außerhalb der Phasen hohen Brems- oder Anfahrschlupfes, ein schnelleres Lernen der Korrekturfaktoren als bei einer Kurvenfahrt, bei schlechter Wegstrecke oder dergl. gegeben. Es gilt ganz allgemein die Formel

$$K_1(n+1) = K_1(n) + L (V_{Basis,1} - K_1(n) \times V_1)$$

"$K_1$" ist der Korrekturfaktor für das Rad "1", "n" und "n+1" symbolisieren zwei aufeinanderfolgende Abtastvorgänge. "L" ist dabei der fahrsituationsabhängige Parameter, der z.B. bei Geradeausfahrt "$10^{-5}$" ist und in anderen, ungünstigen Situationen (Kurven, schlechte Wegstrecke usw.) sehr viel kleiner wird, z.B. $10^{-7}$ oder $10^{-8}$.

Zwischen den Geschwindigkeitssignalen $\underline{v}$(t) oder Korrektursignalen $\underline{K}$(t) der einzelnen Räder werden erfindungsgemäß Korrelationen für die typischen Fahrsituationen ermittelt. Hierzu werden beispielsweise die Räder paarweise, diagonal, seitenweise, achsweise usw. verglichen. Dies geschieht in dem Schaltkreis 6. Die ermittelten oder geschätzten Toleranzen $\underline{G}$1(t,FS) sind daher eine Funktion der jeweiligen Fahrsituation und des Fortschritts (t) der Lernphase unter Berücksichtigung der vorgegebenen Korrelationen zwischen den Korrekturfaktoren $\underline{K}$(t) oder zwischen den Radgeschwindigkeiten $\underline{v}$(t).

Die Lernphase wird abgeschlossen, wenn die Korrekturfaktoren $\underline{K}$(t,FS) unter Berücksichtigung der jeweiligen Fahrsituation eine bestimmte Genauigkeitsschwelle G10 erreicht haben. Es ist auch möglich, mehrere Genauigkeitsschwellen G10,G10',G10"... zu definieren und die anschließende Identifizierungsphase zu starten, sobald in der Lernphase eine Mindest-Genauigkeitsschwelle G10 erreicht wird. Beim Erreichen der nächst höheren Genauigkeitsschwelle G10' wird dann die Empfindlichkeitsschwelle angehoben, so daß bereits kleinere Luftdruckdifferenzen oder Korrekturfaktordifferenzen zur Anzeige von Reifendruckverlust führen.

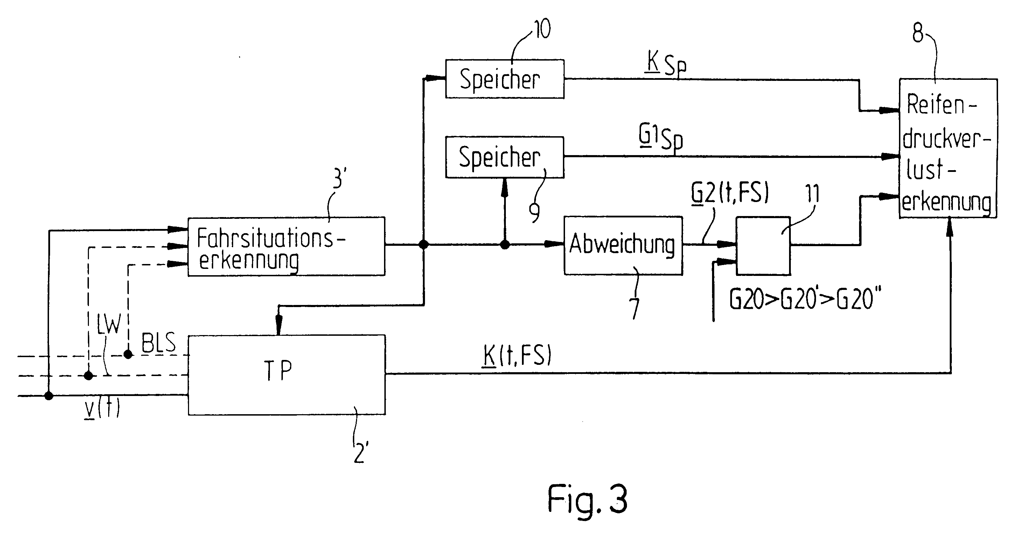

An die Lernphase schließt sich die in Fig. 3 dargestellte Identifizierungsphase an (Phase 2). Die Fahrsituationserkennung mit Hilfe einer Schaltung 3' und die Bildung der Geschwindigkeitskorrekturfaktoren $\underline{K}$(t,FS) mit Hilfe einer Tiefpaß-Filterschaltung 2' auf Basis der Radgeschwindigkeitssignale $\underline{v}$(t) und ggf. weiterer Informationen gleicht oder ähnelt den entprechenden Schritten in der Lernphase nach Fig. 2. Die Abweichungen $\underline{G}$2(t,FS) der aktuellen Korrekturfaktoren $\underline{K}$(t,FS) von den bereits gelernten Werten unter Berücksichtigung der Fahrsituation werden in einem Schaltkreis 7 ermittelt oder abgeschätzt. Die aktuellen Abweichungen $\underline{G}$2(t,FS) werden in einem Vergleicher 11 mit Empfindlichkeitsschwellen G20,G20',G20" verglichen und einer Auswerteschaltung 8 zugeführt. In der Auswerteschaltung 8 werden die aktuellen Geschwindigkeitskorrekturwerte $\underline{K}$(t,FS) der einzelnen Räder unter Berücksichtigung der aktuellen Abweichung $\underline{G}$2(t,FS) mit bereits erlernten, d.h. in der Lernphase für die momentane Fahrsituation ermittelten Geschwindigkeitskorrekturfaktoren $\underline{K}_{Sp}$ unter Berücksichtigung der ebenfalls bereits gelernten, momentanen Toleranz $\underline{G}$1$_{Sp}$ verglichen. Die gelernten Werte $\underline{K}_{Sp}$ und $\underline{G}$1$_{Sp}$ werden Speichern 9 und 10 entnommen. Die Auswerteschaltung 8 schließt aus den ihr zugeführten Signalen auf Reifendruckverlust, wenn für ein Rad (Rad x) die Bedingung

$$K_x(t,FS) + G2_x(t,FS) < K_{Sp,x}(FS) - G1_{Sp,x}(FS),$$

erfüllt ist. Hierbei bedeuten die einzelnen Ausdrücke:

| | |
|---|---|
| x = | Rad 1, Rad 2, Rad 3, Rad 4 |
| FS = | Fahrsituation |
| $K_x(t,FS)$ = | während der Identifizierungsphase (Phase 2) für das Rad x ermittelter aktueller Geschwindigkeitskorrekturfaktor |
| $K_{Sp,x}(FS)$ = | in momentaner FS erwarteter, in der Phase 1 bereits ermittelter Geschwindigkeitskorrekturfaktor für das Rad x |
| $G1_{Sp,x}(FS)$ = | für die aktuelle FS während der Phase 1 bereits ermittelte Toleranz |
| $G2_x(t,FS)$ = | während der Phase 2 aktuelle Abweichung für das Rad x. |

Die Speicher 9,10 werden zweckmäßigerweise bei jedem Radwechsel zurückgestellt. Dies kann der Werkstatt vorbehalten bleiben, oder es ist ein Handschalter zum Zurückstellen vorgesehen. Die Empfindlichkeit der Reifendrucküberwachung wächst dann in Abhängigkeit von dem Lernprozeß, unter Berücksichtigung der jeweiligen Fahrsituation.

Die Abweichungen $\underline{G}2(t,FS)$ werden mit vorgegebenen Empfindlichkeitsschwellen G20,G20',G20" usw. verglichen. Die Schwelle G20 gilt beim Erreichen einer Mindest-Genauigkeitsschwelle (G10) der Geschwindigkeitskorrekturfaktoren $\underline{K}(t,FS)$. Wurde bereits eine höhere Genauigkeit "gelernt", gilt G20', bei noch höherer Genauigkeit G20" usw..

## Patentansprüche

1. Verfahren zur Reifendrucküberwachung durch Messen, Vergleichen und Auswerten der Drehgeschwindigkeiten der einzelnen Fahrzeugräder, bei dem nach einem Lernverfahren in einer Lernphase für die einzelnen Fahrzeugräder Geschwindigkeitskorrekturfaktoren ($\underline{K}(t)$) gebildet werden, dadurch **gekennzeichnet,**

   - daß die Geschwindigkeitskorrekturfaktoren ($\underline{K}(t)$) Werte sind, die multipliziert mit der jeweiligen Radgeschwindigkeit eine Basisgeschwindigkeit ergeben,
   - daß Korrelationen zwischen den Korrekturfaktoren ($\underline{K}(FS)$) für typische Fahrsituationen (FS) festgestellt und
   - von der jeweiligen Fahrsituation abhängige Bandbreiten bzw. "Toleranzen" ($\underline{G}1(t,FS)$) für die Korrekturfaktoren ($\underline{K}(t,FS)$) bestimmt werden,
   - daß in einer Identifizierungsphase (Phase 2) die Abweichungen($\underline{G}2(t)$) der Korrekturfaktoren von den gelernten Werten unter Berücksichtigung der von der Fahrsituation abhängigen Toleranzen ($\underline{G}1(t,FS)$) und dem Fortschritt (t) des Lernverfahrens festgestellt und bewertet werden und

   - daß Reifendruckverlust signalisiert wird, wenn für ein Rad (Rad x) der aktuelle Korrekturfaktor ($K_x(t,FS)$) unter Berücksichtigung der aktuellen Abweichung ($G2_x(t,FS)$) kleiner wird als der für die aktuelle Fahrsituation (FS) in der Lernphase (Phase 1) für das betreffende Rad (Rad x) bereits ermittelte Geschwindigkeitskorrekturfaktor ($K_{Sp,x}(FS)$) unter Berücksichtigung der für die aktuelle Fahrsituation während der Lernphase bereits ermittelten Toleranz ($(G1_{Sp,x}(FS))$).

2. Verfahren nach Anspruch 1, dadurch **gekennzeichnet,** daß Reifendruckverlust signalisiert wird, wenn für ein Rad (Rad x) die folgende Bedingung erfüllt ist:

$$K_x(t,FS) + G2_x(t,FS) < K_{Sp,x}(FS) - G1_{Sp,x}(FS),$$

   wobei bedeuten:

| | |
|---|---|
| x = | Rad 1, Rad 2, Rad 3, Rad 4 |
| FS = | Fahrsituation |
| $K_x(t,FS)$ = | in der Identifizierungsphase (Phase 2) für das Rad x ermittelter aktueller Korrekturfaktor |
| $K_{Sp,x}(FS)$ = | für die aktuelle FS in der Phase 1 bereits ermittelter Korrekturfaktor für das Rad x |
| $G1_{Sp,x}(FS)$ = | für die aktuelle FS in der Phase 1 bereits ermittelte Toleranz |
| $G2_x(t,FS)$ = | aktuelle Abweichung für das Rad x in der Phase 2 . |

3. Verfahren nach Anspruch 1 oder 2, dadurch **gekennzeichnet,** daß als typische Fahrsituationen, in denen Korrelationen zwischen den Korrekturfaktoren ($\underline{K}(t,FS)$) ermittelt und ausgewertet werden, eine oder mehrere der folgenden Situationen erkannt werden: Kurvenfahrt, Geradeausfahrt, hohe Fahrzeugbeschleunigung oder -verzögerung, schlechte Wegstrecke, hoher Antriebs- oder Bremsschlupf, Hoch- oder Niedrigreibbeiwert, unterschiedlicher Reibbeiwert rechts/links usw..

4. Verfahren nach einem oder mehreren der Ansprüche 1 bis 3, dadurch **gekennzeichnet,** daß die Korrelationen durch paarweisen, achsweisen, diagonalen und/oder seitenweisen Vergleich der Radgeschwindigkeiten ($\underline{v}(t)$) oder der Korrekturfaktoren ($\underline{K}(t,FS)$) gebildet werden.

5. Verfahren nach einem oder mehreren der Ansprüche 1 bis 4, dadurch **gekennzeichnet,** daß die Bewertung der Toleranzen ($\underline{G}1(t,FS)$) der Korrekturfaktoren ($\underline{K}(t,FS)$) nach in der Lernphase (Phase 1) in Abhängigkeit von der Fahrsituation (FS) und von dem Fortschritt (t) des Lernverfahrens erreichten Genauigkeitsschwellen (G10,G10'...) erfolgt.

6. Verfahren nach einem oder mehreren der Ansprüche 1 bis 5, dadurch **gekennzeichnet,** daß die Empfindlichkeitsschwellen (G20,G20'...) in Abhängigkeit von der Fahrsituation variiert werden.

7. Verfahren nach einem oder mehreren der Ansprüche 1 bis 5, dadurch **gekennzeichnet,** daß die Empfindlichkeitsschwellen (G20,G20'...) in Abhängigkeit von der Fahrsituation und dem Fortschritt der Lernverfahrens (Phase 1) variiert werden.

8. Verfahren nach einem oder mehreren der Ansprüche 1 bis 7, dadurch **gekennzeichnet,** daß die Lernphase (Phase 1) durch vorgegebene Ereignisse, wie Radmontage, Resetsignal, und/oder durch regelmäßig wiederkehrende Ereignisse, wie Fahrzeug- oder Motorstart, Zeitablauf usw., in Lauf gesetzt wird.

9. Verfahren nach einem oder mehreren der Ansprüche 1 bis 8, dadurch **gekennzeichnet,** daß die Lernphase (Phase 1) abgeschlossen wird, wenn die Korrekturfaktoren ($\underline{K}$(t,FS)) unter Berücksichtigung der jeweiligen Fahrsituation oder unter idealen Bedingungen eine vorgegebene Genauigkeitsschwelle (G10) erreicht haben.

10. Verfahren nach einem oder mehreren der Ansprüche 1 bis 9, dadurch **gekennzeichnet,** daß die Identifizierungsphase (Phase 2) erst nach Abschluß der Lernphase (Phase 1) gestartet wird.

11. Verfahren nach einem oder mehreren der Ansprüche 1 bis 10, dadurch **gekennzeichnet,** daß die Identifizierungsphase (Phase 2) gestartet wird, sobald in der Lernphase (Phase 1) eine Mindest-Genauigkeitsschwelle (G10) erreicht ist.

12. Verfahren nach Anspruch 11, dadurch **gekennzeichnet,** daß mehrere Genauigkeitsschwellen (G10,G10'...) vorgegeben werden und daß die Empfindlichkeitsschwelle (G20,G20'...) in Abhängigkeit von der in der Lernphase erreichten Genauigkeitsschwelle (G10,G10'...) variiert wird.

13. Schaltungsanordnung zur Durchführung des Verfahrens nach einem der Ansprüche 1 bis 12, dadurch **gekennzeichnet,** daß diese eine Tiefpaß-Filterschaltung (2,2') zur Bildung der Geschwindigkeitskorrekturfaktoren ($\underline{K}$(t,FS)) auf Basis der Radgeschwindigkeitssignale ($\underline{v}$(t)) aufweist, daß die Dämpfungscharakteristik der Tiefpaß-Filterschaltung (2,2') in Abhängigkeit von der Fahrsituation (FS), die das Ausgangssignal eines Fahrsituationserkennungskreises (3,3') wiedergibt, veränderbar ist, und daß Schaltkreise (6) zur Ermittlung oder Abschätzung der von der Fahrsituation abhängigen Toleranzen ($\underline{G}$1(t,FS)) und Schaltkreise (7) zur Ermittlung oder Abschätzung der von der Fahrsituation abhängigen Abweichungen ($\underline{G}$2(t,FS)) von den Geschwindigkeitskorrekturfaktoren vorhanden sind.

**Claims**

1. Process for monitoring tire pressure by measuring, comparing and evaluating the rotating speeds of the individual wheels of the vehicle, wherein speed correction factors ($\underline{K}$(t)) are formed for the individual wheels of the vehicle in a learning phase according to a learning process, characterized in that

   - the speed correction factors ($\underline{K}$(t)) are values which, multiplied by the respective wheel speed, yield a basic speed,
   - correlations between the correction factors ($\underline{K}$(FS)) for typical travel situations (FS) are determined, and
   - band widths or "tolerances" ($\underline{G}$1/t,FS) as a function of the respective travel situation are determined for the correction factors ($\underline{K}$(t,FS)),
   - the deviations ($\underline{G}$2(t) of the correction factors from the learned values are determined and evaluated in an identification phase (phase 2), taking into account the travel-situation-dependent tolerances (G1/t,FS) and the progression (t) of the learning process, and
   - loss of tire pressure is signalled when the current correction factor ($K_x$(t,FS) for a wheel (wheel x) becomes smaller, taking into account the current deviation ($G2_x$(t,FS)), than the speed correction factor ($K_{Sp,x}$(FS)) already determined for the wheel in question (wheel x) for the current travel situation (FS) during the learning phase (phase 1), taking into account the tolerance ($G1_{Sp,x}$(FS)) already determined for the current travel situation during the learning phase.

2. Process as claimed in claim 1, characterized in that loss of tire pressure is signalled when the following condition is satisfied for a wheel (wheel x):

$$K_x(t,FS) + G2_x(t,FS) < K_{Sp,x}(FS) - G1_{SP,x}(FS),$$

   in which

   | | |
   |---|---|
   | x | is wheel 1, wheel 2, wheel 3, wheel 4, |
   | FS | is the travel situation |
   | $K_x$(t,FS) | is the current correction factor determined for wheel x during the identification phase (phase 2), |
   | $K_{SP,x}$(FS) | is the correction factor already determined during phase 1 for wheel x for the current travel situa- |

tion,

$G1_{Sp,x}(t,FS)$ is the tolerance already determined in phase 1 for the current travel situation, and

$G2_x(t,FS)$ is the current deviation for wheel x during phase 2.

3. Process as claimed in claim 1 or 2, characterized in that one or more of the following situations are recognized as typical travel situations, in which correlations between the correction factors ($\underline{K}(t,FS)$) are determined and evaluated: travel in curve, straight travel, high acceleration or deceleration of the vehicle, rough road section, high traction slip or high brake slip, high or low coefficient of friction, different coefficients of friction on the right and left sides, etc.

4. Process as claimed in one or more of the claims 1 through 3, characterized in that the correlations are formed by comparison of the wheel speeds ($\underline{v}(t)$) or of the correction factors ($\underline{K}(t,FS)$ in pairs, axle by axle, diagonally and/or side by side.

5. Process as claimed in one or more of the claims 1 through 4, characterized in that the evaluation of the tolerances ($\underline{Gl}(t,FS)$ of the correction factors ($\underline{K}(t,FS)$) is performed according to accuracy thresholds (G10, G10', ...) reached during the learning phase (phase 1) as a function of the travel situation (FS) and of the progression (t) of the learning process.

6. Process as claimed in one or more of the claims 1 through 5, characterized in that the sensitivity thresholds (G20, G20',...) are varied as a function of the travel situation.

7. Process as claimed in one or more of the claims 1 through 5, characterized in that the sensitivity thresholds (G20, G20',...) are varied as a function of the travel situation and the progression of the learning phase (phase 1).

8. Process as claimed in one or more of the claims 1 through 7, characterized in that the learning phase (phase 1) is started by predetermined events, such as the mounting of a wheel, a reset signal, and/or by regularly recurring events, such as the start of the vehicle or engine, expiration of time, etc.

9. Process as claimed in one or more of the claims 1 through 8, characterized in that the learning phase (phase 1) is concluded when the correction factors ($\underline{K}(t,FS)$)

have reached, taking into account the actual travel situation or under ideal conditions, a predetermined accuracy threshold (G10).

10. Process as claimed in one or more of the claims 1 through 9, characterized in that the identification phase (phase 2) is started only after the conclusion of the learning phase (phase 1).

11. Process as claimed in one or more of the claims 1 through 10, characterized in that the identification phase (phase 2) is started as soon as a minimum accuracy threshold (G10) is reached during the learning phase (phase 1).

12. Process as claimed in claim 11, characterized in that a plurality of accuracy thresholds (G10, G10'...) are preset, and that the sensitivity threshold (G20, G20'...) is varied as a function of the accuracy threshold (G10, G10'...) reached during the learning phase.

13. Circuit for implementing the process as claimed in one of the claims 1 through 12, characterized in that the circuit has a low-pass filter circuit (2, 2') for forming the speed correction factors ($\underline{K}(t,FS)$) on the basis of the wheel speed signals ($\underline{v}(t)$), in that the attenuation characteristic of the low-pass filter circuit (2, 2') is variable as a function of the travel situation (FS), which is reflected by the output signal of a travel situation recognition circuit (3, 3'), and in that circuits (6) for determining or estimating the travel situation-dependent tolerances ($\underline{Gl}(t,FS)$) and circuits (7) for determining or estimating the travel situation-dependent deviations ($\underline{G2}(t,FS)$) from the speed correction factors are provided.

**Revendications**

1. Procédé de surveillance de la pression des pneumatiques par mesure, comparaison et exploitation des vitesses de rotation des différentes roues d'un véhicule, selon lequel des facteurs de correction de vitesse ($\underline{K}(t)$) sont formés pour les différentes roues du véhicule selon un processus d'apprentissage exécuté dans une phase d'apprentissage, caractérisé :

- en ce que les facteurs de correction de vitesse ($\underline{K}(t)$) sont des valeurs qui, multipliées par la vitesse de roue respective, donnent une vitesse de base,
- en ce que des corrélations sont établies entre les facteurs de correction ($\underline{K}(FS)$) correspondant à des situations de conduite (FS) typiques et

- des largeurs de bande ou "tolérances" ($\underline{G}$1(t,FS)) dépendant de la situation de conduite respective sont établies pour les facteurs de correction ($\underline{K}$(t,FS)),

- en ce que, dans une phase d'identification (phase 2), les écarts ($\underline{G}$2(t)) des facteurs de correction vis-à-vis des valeurs d'apprentissage sont déterminés et exploités compte tenu des tolérances ($\underline{G}$1(t,FS)) dépendant de la situation de conduite et compte tenu du progrès (t) du processus d'apprentissage, et

- en ce qu'une perte de pression de pneumatique est signalée lorsque, pour une roue (roue x), le facteur de correction actuel ($K_x$(t,FS)) est, compte tenu de l'écart actuel ($G2_x$(t,FS)), plus petit que le facteur de correction de vitesse ($K_{Sp,x}$(FS)) déjà déterminé pour la situation de conduite actuelle (FS) dans la phase d'apprentissage (phase 1) pour la roue concernée (roue x), compte tenu de la tolérance ($G1_{Sp,x}$(FS)) déjà établie pour la situation de conduite actuelle pendant la phase d'apprentissage.

2. Procédé selon la revendication 1, caractérisé en ce qu'une perte de pression de pneumatique est signalée lorsque, pour une roue (roue x), la condition suivante est remplie :

$$Kx(t,FS) + G2_x(t,FS) < K_{Sp,x}(FS) - G1_{Sp,x}(FS)$$

dans laquelle :

| | |
|---|---|
| x = | roue 1, roue 2, roue 3, roue 4 |
| FS = | situation de conduite |
| Kx(t,FS) = | facteur de correction actuel établi pour la roue x dans la phase d'identification (phase 2) |
| $K_{Sp,x}$(FS) = | facteur de correction pour la roue x déjà établi pour la situation de conduite actuelle dans la phase 1 |
| G1 $_{Sp,x}$(FS) = | tolérance déjà établie pour la situation de conduite actuelle dans la phase 1 |
| $G2_x$(t,FS) = | écart actuel pour la roue x dans la phase 2. |

3. Procédé selon la revendication 1 ou 2, caractérisé en ce que, comme situations de conduite typiques dans lesquelles des corrélations sont établies entre les facteurs (K(t,FS)) de correctionet exploitées, une ou plusieurs des situations suivantes sont constatées : conduite en virage, conduite en ligne droite, accélération ou décélération élevée du véhicule, voie de roulement en mauvais état, glissement de traction ou de freinage élevé, coefficient de frottement élevé ou faible, coefficient de frottement droite/gauche différent, etc..

4. Procédé selon une ou plusieurs des revendications 1 à 3, caractérisé en ce que les corrélations sont formées au moyen d'une comparaison par paire, par essieu, par diagonale et/ou par côté des vitesses de roue ($\underline{v}$(t)) ou des facteurs de correction ($\underline{K}$(t,FS)).

5. Procédé selon une ou plusieurs des revendications 1 à 4, caractérisé en ce que l'évaluation des tolérances ($\underline{G}$1(t,FS)) des facteurs de correction ($\underline{K}$(t,FS) a lieu selon des seuils de précision (G10, G10', ...) atteints dans la phase d'apprentissage (phase 1) en fonction de la situation de conduite (FS) et du progrès (t) du processus d'apprentissage.

6. Procédé selon une ou plusieurs des revendications 1 à 5, caractérisé en ce que les seuils de sensibilité (G20, G20', ...) sont modifiés en fonction de la situation de conduite.

7. Procédé selon une ou plusieurs des revendications 1 à 5, caractérisé en ce que les seuils de sensibilité (G20, G20', ...) sont modifiés en fonction de la situation de conduite et du progrès du processus d'apprentissage (phase 1).

8. Procédé selon une ou plusieurs des revendications 1 à 7, caractérisé en ce que la phase d'apprentissage (phase 1) est mise en marche au moyen de phénomènes préfixés, tels que montage de roue, signal de remise à zéro, et/ou au moyen de phénomènes revenant régulièrement, tels que démarrage du véhicule ou du moteur, expiration d'une période de temps, etc..

9. Procédé selon une ou plusieurs des revendications 1 à 8, caractérisé en ce que la phase d'apprentissage (phase 1) est close lorsque les facteurs de correction ($\underline{K}$(t,FS)) ont atteint un seuil de précision préfixé (G10), en tenant compte de la situation de conduite momentanée ou dans des conditions idéales.

10. Procédé selon une ou plusieurs des revendications 1 à 9, caractérisé en ce que la phase d'identification (phase 2) n'est démarrée qu'après clôture de la phase d'apprentissage (phase 1).

11. Procédé selon une ou plusieurs des revendications 1 à 10, caractérisé en ce que la phase d'identification (phase 2) est démarrée dès qu'un seuil minimal de précision (G10) est atteint dans la phase d'apprentissage (phase 1).

12. Procédé selon la revendication 11, caractérisé en ce qu'il est prévu plusieurs seuils de précision (G10, G10', ...) et en ce que le seuil de sensibilité (G20, G20', ...) est modifié en fonction du seuil de précision (G10, G10', ...) atteint dans la phase d'apprentissage.

13. Agencement de circuit permettant de mettre en oeuvre le procédé selon l'une des revendications 1 à 12, caractérisé en ce que cet agencement de circuit comprend un circuit de filtre passe-bas (2, 2') qui sert à la formation des facteurs de correction de vitesse ($\underline{K}$(t,FS))sur la base des signaux de vitesse de roue ($\underline{v}$(t)), en ce que la caractéristique d'amortissement du circuit de filtre passe-bas (2, 2') peut être modifiée en fonction de la situation de conduite (FS), laquelle reproduit le signal de sortie d'un circuit de reconnaissance de situation de conduite (3, 3') et en ce qu'il est en outre prévu des circuits (6) servant à établir ou estimer les tolérances ($\underline{G}$1(t,FS)) dépendant de la situation de conduite et des circuits (7) servant à établir ou estimer les écarts ($\underline{G}$2(t,FS)) vis-à-vis des facteurs de correction de vitesse.

# Fig. 1

# Fig. 2

Fig. 3